# EUROPEAN PATENT APPLICATION

(11) **EP 1 521 451 A2**
(43) Date of publication of application: **06.04.2005**
(21) Application number: 04023245.6
(22) Date of filing: 29.09.2004
(51) Int. Cl.: H04N 1/60, H04N 1/405

(54) **Image processing method, image processing device, image processing program, and printing control device**

(30) Priority: 30.09.2003 JP 2003340077
(71) Applicant: SEIKO EPSON CORPORATION, Tokyo 160-0811 (JP)
(72) Inventor: Katsuyama, Kimito, Suwa-shi Nagano (JP)
(74) Representative: Winter, Brandl, Fürniss, Hübner, Röss, Kaiser, Polte Partnerschaft Patent- und Rechtsanwaltskanzlei

(57) **Abstract**

To process image data representing images comprising a plurality of pixels, image data specifying a forming state of dots for each pixel is retrieved, the dot configuration data representing the configuration of dots recorded on a printing medium is retrieved, and recording state data representing the recording state of the dots formed by the image data on the subpixel plane formed by subpixels that are smaller than the pixels is created.

## Description

### BACKGROUND OF THE INVENTION

### Field of the Invention

The present invention relates to an image processing method, image processing device, image processing program, and printing control device.

### Description of the Related Art

When images are printed by a printing device, various image processes are normally carried out, such as a microweave process to prevent the noise forming adjacent dots on the printing medium from becoming biased toward that noise and half tone processing or color conversion processing of tone data representing pixel color for each color component. The image quality of the printed material printed by means of such image processing depends significantly on the contents of the image process. Although the image quality can be assessed from various points of view. Frequency analysis is a known method for evaluating noise or visual smoothness, that is, graininess (see, for example, *Japan Hardcopy '99 Collected Papers,* pp. 291-294, by Makoto Fujino).

### SUMMARY OF THE INVENTION

In order to evaluate graininess in the aforementioned Non-Patent Reference 1, the image must actually be printed based on image processed data, and the printed results must be canned by a scanner. Thus, when modifying the contents of the image process to optimize image quality, images must be printed and scanned every time the image process is modified, making this an extremely time-consuming method. Because of the extremely time-consuming nature of these operations, it is not possible for practical purposes to optimize image quality through repeated trial-and-error while modifying the parameters of the image process.
In view of the foregoing, an object of the present invention is to provide an image processing method, image processing device, image processing program, and printing control device allowing the image quality of printer material to be assessed without actually printing or scanning images.

To address such an object in the present invention, image data representing a forming state of dots for each pixel is retrieved to simulate the dots recorded on the printing medium by the image data. That is, the image data represents the configuration of dots per pixel (including whether or not there are dots formed by different ink drops) but does not represent the recording state of the dots actually recorded on the printing medium (appearance of dots recorded on the printing medium), and this recording state is therefore simulated.

The dot configuration data representing the configuration of dots recorded on the printing medium is thus stored on a memory medium in the present invention. Subpixels that are smaller than the pixels in the image data are formed to simulate the dot configuration. That is, the dot configuration data and the configuration of the dots for each pixel can be referenced to specify the presence or absence of dots as well as their configuration per pixel. The formation of a subpixel plane by the subpixels which are smaller than the pixels allows the configuration of the pixels to be described in detail, making it possible to specify parts where ink is recorded and parts were none is recorded in each pixel.

Because the configuration of dots on the subpixel plane correspond to the appearance of the dots recorded on the printing medium, the image quality of the printed material can be assessed without actually printing or scanning images. That is, the recording state of the dots can be obtained extremely easily and rapidly with no need whatsoever for operations requiring time or manual labor, such as scanning or printing. As a result, it is extremely easy to repeatedly calculate the recording state of the dots, and extremely easy to assess even large amounts of image data. It is thus possible to specify a desirable image process through trial and error of image processing of the image data.

The image data can be used in a variety of forms, provided that the dot configuration for each pixel can be specified. For example, the forming state of dots may be represented by the presence or absence of dots (2 tone), or by the presence or absence of dots and the size of the dots (3 or more tone) when dots of different size are recorded. Image data for each color can be prepared to simulate the recording state of the dots for each color when multiple colors of ink are used in the printing device for recording the dots.

Data that has undergone a half tone process may be used as an example of such image data. That is, data representing pixel colors in terms of tone levels for each color component is commonly in the form of image data handled by a computer. When this image data is printed, tone data is produced for the tone representation of the amount of ink used by the printing device for each color in a low number tone (usually about 2 to 4 tone), and this data commonly undergoes a half tone process. A structure in which the half tone processed data is retrieved in the form of the image data can then be employed to work the invention on a common printing device.

Because the half tone processed data specifies the configuration of dots for each pixel as noted above, the half tone processed data can be used as such in the form of data retrieved in the step for retrieving the image data. Of course, the algorithm for the half tone process can be used in a variety of forms, and various algorithms such as random dither or dither can be used. The images represented by the image data may be certain graphics or photographs, and may be certain patterns, such as certain colored patterns or gradation patterns. The size of the image is not particularly limited. Images of various sizes can be simulated.

In the step for creating the recording state data, the pixels should be divided into subpixels, and a subpixel plane in the form of a dot matrix should be formed by the subpixels to describe the presence or absence of recorded dots on the subpixel plane. When image data is prepared for each ink color used in the printing device to simulate the recording state of the dots for each color, as described above, the pixels in the form of a dot matrix formed for each color can be superposed to define the pixels representing the those locations. It is thus possible to define the subpixels representing those locations for each color, and to evaluate the overlap of colored ink on the printing medium. The recording state of multi-colored printed material can thus be easily assessed.

Various methods can be used to assess the recording state of the dots. The evaluation of the color values of each subpixel is an example. That is, the brightness, color saturation, and hue of the dots formed by the collection of subpixels can be assessed, provided that the color value of each subpixel can be specified. If the color values can be ascertained, the image quality such as the graininess or tone properties can be evaluated in the images formed by the collection of dots. In other words, the ability to specify the color values of each subpixel enables both the macroscopic evaluation of image quality and the microscopic color evaluation of dots.

The color value can be calculated by a variety of methods, but should be calculated from the spectral reflectance of the dots. That is, specifying the spectral reflectance allows the colors of dots under any light source to be specified, and allows dot color and image quality to be evaluated with a high degree of freedom. The dot configuration is described by subpixels in the invention, and dots thus range across a plurality of connected subpixels. Such subpixels allow dot color to be easily assessed if the dots are the same color and the same spectral reflectance is defined, but color values may, of course, also be different in the middle and ends of dots if the effects of dither, for example, are taken into consideration to correct the spectral reflectance or it is corrected by a computer process.

If the spectral reflectance of each color can be ascertained when evaluating the colors formed by the subpixels, it will be possible to calculate the color values obtained as a result of the overlap of the colors. It is possible to use a form, for example, in which the spectral reflectance obtained by multiplying the spectral reflectance of subpixels corresponding to said locations by each wavelength is used as the superposed dot spectral reflectance. The spectral reflectance of the printing medium for subpixels not forming dots should also be used when calculating the color values of the subpixels in order to evaluate macroscopic image quality in the dots, as described above.

Dot color or image quality can also be easily and effectively evaluated when using the brightness as the color value calculated on the basis of the spectral reflectance. That is, since the human eye is more sensitive to brightness than to color saturation or hue, effective evaluation can be based on only one color component when the evaluation is based on brightness during the evaluation of image quality in images formed by collections of dots or dots formed by collections of subpixels. For detailed evaluation, of course, the evaluation may be based on two or more color components from among brightness, color saturation, or hue.

The graininess of images may be evaluated as a desirable form in the evaluation of images. A graininess indicator for evaluating graininess is calculated based on the recording state data. That is, because it is possible to retrieve the recording state of dots formed by image data from the recording state data, a numerical value can be assigned to the impression of graininess that is formed in the recording states, the graininess indicator can be used to quantify graininess, and the graininess can be objectively evaluated. As a result, subjective influences such as the preferences of the evaluator can be eliminated, thus improving the quality of the evaluation when evaluating graininess.

Various indicators can be used for the graininess indicator, an indicator for evaluating spatial frequency properties is preferred. That is, because the spatial frequency of brightness in dots formed on the subpixel plane corresponds to the brightness amplitude per unite length, it is possible to quantify the noise or graininess of dots on the subpixel plane by means of the spatial frequency. When the evaluation is based on spatial frequency, the subpixel plane should be defined as two-dimensional space, and spectra on two-dimensional reciprocal space should be obtained by Fourier transformation of the brightness for the subpixels.

Of course, since the response to each spatial frequency of the brightness is different to the human eye, the graininess indicator may be calculated by multiplying the visual spatial frequency properties (VTF: visual transfer function) by the spatial frequency of the brightness. Since the way in which graininess is perceived by the human eye also differs depending on the overall brightness of the image, the graininess indicator may also include a correction factor that depends on the overall brightness of the image.

The values calculated for each subpixel may also be integrated to evaluate the graininess of the overall image represented by the image data. The graininess may also be evaluated by taking color components other than brightness into consideration. For example, brightness components, red-green components, and yellow-blue components may be calculated, they may undergo Fourier transformation, and the graininess indicator may then be calculated by multiplying predetermined visible spatial frequency properties by each color component.

Breaking the pixels of the image data down into subpixels which are smaller than pixels is a significant element in the practical evaluation of graininess based on the spatial frequency as noted above without the need for printing or scanning images. That is, it is not possible to define in detail the extent of the overlap of dots of each color or the configuration of the dots formed on the printing medium by just defining the presence and absence of dots for each pixel, but describing the recording state of the dots at the subpixel level will allow the spatial frequency to be evaluated in a state that includes the dot configuration. As a result, graininess perceived by the human eye can be more precisely represented without printing or scanning.

Another example of a form for describing the recording state of the dots at the subpixel level is to specify the size of the dots based on the dot configuration data, assuming a typical configuration formed on the printing medium. That is, when it is assumed that dots of a typical configuration formed by the simulated printing device will be recorded on the printing medium, parameters specifying the size can be used as the dot configuration data to allow the dot configuration on the subpixel plant to be readily described.

A variety of typical dot configurations can be used, such as generally elliptical dots. That is, in ink jet types of printers in which ink is ejected from nozzles as a carriage is run in the main scanning direction, the ink drops are ejected at a relative velocity in the main scanning direction on the printing medium, often resulting in an elliptical dot configuration. The invention can thus be worked in ink jet types of printers assuming an elliptical dot configuration to evaluate the recording state of dots. Values such as the major and minor axes of the ellipsis can be used as the above parameters.

Of course, the typical configuration of the dots is not limited to elliptical shapes, and the above parameters are not limited to descriptions with only two types of values. Of course, a plurality of typical configurations may be assumed. When the ink is separated into a plurality of ink drops during the ejection of the ink from the nozzles, the dot configuration data may be composes of data representing the typical configuration and size of the plurality of separately recorded dots. In such cases, parameters allowing the locations of both to be specified should be included in the dot configuration data.

A desirable form when describing the recording state of dots on the subpixel plane is to use dot location data representing the location where the dots recorded by the image data are formed. That is, because the subpixels are smaller than pixels, the locations where the dots are formed can be adjusted on the subpixel plane. In the dot location data, it thus becomes possible to specify the locations where the dots are formed in subpixel units, the dot configuration is determined in the step for creating the recording state data, and the detailed dot formation locations on the subpixel plane are determined.

The ability to thus adjust the dot formation location on the subpixel plane permits detailed description of the locations where dots are formed, which change according to various printing conditions in the printing device, differences in the image data, or differences in the locations of dots formed for each color. In printing devices where ink is ejected from a plurality of nozzles formed in the ink ejection mechanism, for example, the locations where the dots are formed will depend on the ink ejection properties. Furthermore, since the use of the ink ejection properties as the specific properties will allow specific dot formation locations to be determined, those dot formation locations can be used as the standard dot formation locations.

Thus, when the dot formation locations are changes depending on the ink ejection properties, the extent of the change from the standard dot formation location can be specified to specify the changed dot formation locations. The dot formation locations can thus be adjusted by describing the extent of the change in subpixel units as the dot location data. The standard dot formation location should represent the locations where dots are formed when the ink ejection properties are the specified properties. Dot formation locations and the like can be used when dost are formed in the middle of the pixels, for example.

The ink ejection properties may be ink ejection properties for each of the plurality of nozzles, or ink ejection properties that change as a result of the operation of ink ejection mechanisms. Examples of ink ejection properties for each of the nozzles include the amount, direction, or speed of the ink ejected from the nozzles. That is, the amount, direction, and speed of the ink ejected from the nozzle change as a result of construction errors in the nozzles, resulting in changes in the locations where the ink drops are recorded. The extent of the change from the standard dot formation location for each nozzle can thus be used as the dot location data to calculate the recording state of the dots in view of nozzle construction errors.

Examples of ink ejection properties which change as a result of the operation of ink ejection mechanisms include relative errors in the dot formation location caused by the repeated ejection of ink upon the operation of ink ejection mechanisms such as carriages equipped with nozzles or paper feed rollers. That is, repeated movement, stopping, and restarting of the carriage can cause errors which do not allow the dot formation location to be strictly reproduced in the process of repetition. Errors can also result that do not allow the targeted amount of paper feed to be strictly reproduced each time when the paper is fed through repeated operations such as the paper feed roller. The use of data representing such errors as the dot location data representing the extent of the changes from the dot formation location will allow the recording stat e of the dots to be calculated in view of the changes caused by the operation of the ink ejection mechanisms.

In cases where printing with an ink ejection mechanism is subject to a plurality of complex controls, it is possible that there will be different nozzles ejecting the ink forming the dots, even through the image data is shared in common, and the nozzles forming the dots should therefore be specified based on the method for controlling the ink ejecting mechanism. An example of a form for that purpose is to reference control method data in which have been noted the method for controlling main scanning and subscanning in the ink ejection mechanism, and the arrangement of the plurality of nozzles formed in the ink ejection mechanism.

That is, various methods can be used to control main scanning, such as control methods in which printing is done only when the carriage moves in a certain direction and control in which printing is done in both directions or control in which dots are formed per line by multiple main scans. Different main scanning control methods will result in different operating errors in the ink ejection mechanism or nozzles for forming dots. Thus, when there can be a variety of methods for controlling main scanning, the methods should be noted in the control method data, allowing the control method to be specified.

Methods for controlling subscanning include using various control methods for adjusting the amount of paper feed in the subscanning direction in order to prevent the occurrence of linear portions where not dots are recorded in the main scanning direction or linear parts where overlapping dots are recorded, and to prevent the formation of adjacent dots by ink ejected from the same nozzle. In such cases, different subscanning control methods will result in different operating errors in the ink ejection mechanism or nozzles for forming dots. Thus, when there can be a variety of methods for controlling subscanning, the methods should be noted in the control method data, allowing the control method to be specified.

The plurality of nozzles can be arranged in various ways depending on the printing device. For example, the number of nozzles formed in the ink ejection mechanism for recording ink of a certain color will vary depending on the type of printing device, and the nozzles can be arranged in various ways, various sequences, and so forth. Data representing the arrangement of the plurality of nozzles can also be included in the control method data. As a result, the control method data can be referenced to ensure that the nozzles ejecting the ink are uniformly specified according to various types of control methods and nozzle arrangements.

When the dot location data or control method data can thus be used to calculate the recording state of the dots which varies for each type of error or control method, the recording state of the dots can be obtained with extreme ease when there are many different errors or control methods. The recording state of the dots can also be obtained with extreme ease for an abundance of image data. It is thus extremely easy to check data by trial and error, and to ascertain the best image process, such as half tone or color conversion processes, for producing image data, as well as the image data itself. It is also possible to ascertain control methods or image processes that will avoid significant deterioration of image quality despite any type of error, and to extract the optimal ones. Of course, in the sense of optimization, optimal control methods or image processes may also be ascertained baking into consideration other points of view as well, such as printing speed or the amount of ink that is used.

The concept of the invention includes a variety of other embodiments and variations, such as cases where the image processing device is used on its own, and cases where it is used in other methods while incorporated with other devices. In methods for producing recording state data representing the recording state of dots described above, the invention can also be said to exist in procedures in which processes advance according to a certain order. The invention can therefore also be worked as a method. In some cases, a certain program can be run on a computer when working the invention.

Any memory medium can be used to provide such a program. Examples include magnetic recording media and opticomagnetic recording media. All recording media developed in the future can similarly be considered. The concept of the invention may also be worked in part by software and in part by hardware, and may in part be recorded on recording media and read as needed. The same is true of stages of reproduction, whether primary or secondary reproductions, etc.

The invention can also be provided in the form of an auxiliary function of a printing control device for printing upon image data processing of tone data. That is, because image data specifying the forming state of dots for each pixel is produced through a half tone process, color conversion process, or the like for converting a color system in general printing control processes, the functions of the invention can be added to such a printing control device. It can be constructed so as to allow a desired image process to be selected. Such a structure allows the dot recording state to be calculated when printing is based on the results of image processes that can be run by printing control devices.

The various types of structures noted above can also be used in such a structure, of course. For example, in cases where different dot recording states are calculated for each control method or various types of errors using control method data or dot location data as noted above, the structure can be devised to take main scanning and subscanning control methods in ink ejection mechanisms with which the aforementioned printing device is equipped. Of course, the selection of the aforementioned image processes or control methods may involve directly specifying the image process or control method, or indirect selection through the selection of the printing mode, such as high image quality mode or priority mode, for example. When printing is done by a printing control device, the recording state of the dots can be ascertained in advance, thus making it possible to ascertain beforehand whether or not printing can be done as the user wishes or needs.

### BRIEF DESCRIPTION OF THE DRAWINGS

Figure 1 is a block diagram of the schematic structure of a printing control device.
Figure 2 is a flow chart of the simulation process.
Figure 3 illustrates an example of parameter data.
Figure 4 illustrates an example of dot configuration data.
Figure 5 illustrates an example of spectral reflectance data.
Figure 6 illustrates the simulation process.
Figure 7 is a flow chart for calculating the graininess indicator.
Figure 8 illustrates how to calculate the graininess indicator.
Figure 9 illustrates an example of dot location data.
Figure 10 illustrates an example of dot location data.
Figure 11 illustrates an example of control method data.
Figure 12 illustrates and example of data during bi-directional printing of small, medium, and large dots.

### DETAILED DESCRIPTION

Embodiments of the invention are described in the following order.
1) Structure of Printing Control Device
2) Simulation Process
   2-1) Creation of Recording State Data on Subpixel Plane
   2-2) Calculation of Graininess Indicator
3) Other Embodiments

### 1) Structure of Printing Control Device

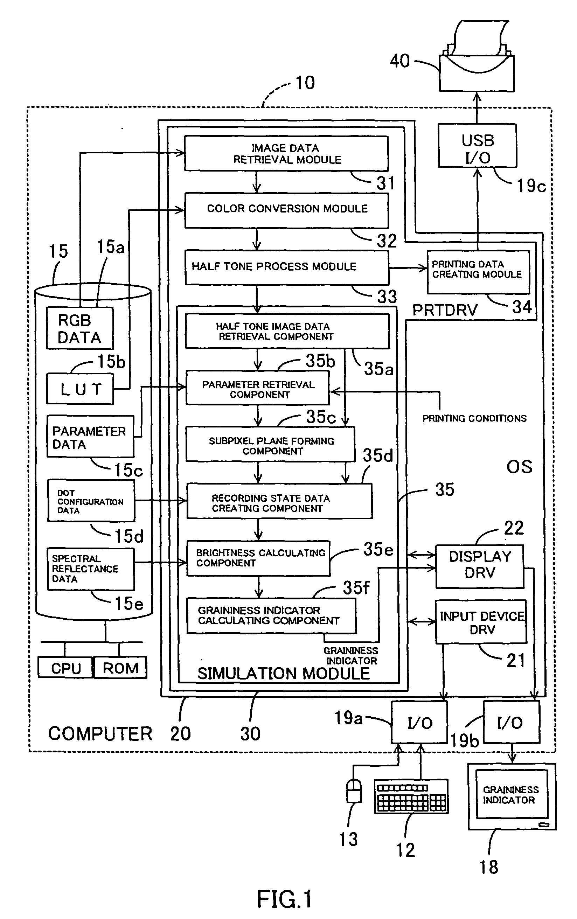

Figure 1 is a block diagram of the schematic structure of a computer serving as a printing control device in the invention. The computer 10 comprises a CPU which is the center of computer processing, and memory media such as ROM or RAM, and can run certain programs while using peripheral devices such as an HDD 15. Operating input devices such as a keyboard 12 and mouse 13 are connected by an I/O 19a to the computer 10, and a display 18 is also connected by a USB I/O. It is also connected by the USB I/O 19C to a printer 40.

The printer 40 in the present embodiment comprises a mechanism permitting the attachment and detachment of ink cartridges filled with various colored inks. Cartridges for CMYKOG (cyan, magenta, yellow, black, orange, green) inks are mounted on this mechanism. The printer 40 can combine these ink colors to form numerous colors, thereby forming color images on a printing medium. The printer 40 in this embodiment is an ink jet type of printer, but various other types of printers such as laser printers can be used in the invention in addition to ink jet printers.

The use of the six colors of CMYKOG is not necessary. The four colors of CMYK or seven colors of CMYKOGDY (direct yellow) may also be used. Other colors such as lc (light cyan) and lm (light magenta) may also be used, of course, instead of O and G inks, and gray ink may be used for the K ink.

A simplified description of the computer 10 will be given. One with the common structure of a personal computer may be used. Computers to which the invention is applicable are not limited to personal computers, of course. Although what is referred to as a desk top computer is used in the embodiment, lap tops and portable types may also be used. In addition, the interface connecting the computer 10 and printer 40 need not be limited to the above. Various types of connecting embodiments such as parallel interfaces, SCSI connections, and wireless connections can also be used, as well as any connecting embodiments developed in the future.

The printing control device in this embodiment is constructed with a computer 10, but the printing control process in the invention can also be worked by a program executing environment mounted on a printer. The printing control process can also be implemented by obtaining image data from a digital camera directly connected to the printer. That is, the printing control process on the printer can be simulated with a computer. Of course, the invention can also be applied to structures for implementing the printing control process with a digital camera in similar structures, and the invention can also be applied to various other structures such as structures in which the printing control process of the invention is implemented by a decentralized process. The present invention may also be applied for printing control processes in composite devices comprising integrated scanners for retrieving images and printers for printing images.

In the printer driver in this embodiment, a printer driver (PRT DRV) 30, impute device driver (DRV) 21, and display driver (DRV) 22 are incorporated in the OS 20. The display DRV 22 is a driver for controlling the display such as a printer property screen or image to be printed on the display 18, and the input device DRV 21 is a driver for receiving certain input operations upon receipt of code signals from a mouse 13 or keyboard 12 input via the I/O 19a.

The PRT DRV 30 can execute printing through a certain process on patch images described below or images for which a printing command has been executed from an application program (not shown). The recording state of dots to be formed on the printing medium can also be simulated without actually being printed. The PRT DRV 30 comprises an image data retrieval module 31, color conversion module 32, half tone process module 33, and printing data creation module 23, for implementing printing. It also comprises a simulation module 35 for simulating the recording state of the dots.

The image data retrieval module 31 is a module for retrieving RGB data 15a from the HDD 15, and reducing or increasing the number of pixels by interpolation or the like as needed if the number of pixels is too great or too little based on the resolution during printing by the printer. This RGB data is dot matrix data stipulating the color of each pixel through the tone representation of RGB (red, green, blue) color components, which in this embodiment is 256 tones for each color, and employs a color system in accordance with sRGB standards.

The example of RGB data is illustrated in this embodiment, but various other types of data, such as JPEG image data using the YCbCr color system or data using the CMYK color system, can also be used. Of course, the invention is also applicable to data based on the Exif 2.2 standard (Exif is a registered trademark of the Japan Electronics and Information Technology Industries Association), data corresponding to Print Image Matching (PIM; PIM is a registered trademark of Seiko Epson), and the like.

The color conversion module 32 is a module for converting the RGB data color system to the CMYKOG color system with reference to the LUT 15b stored in the HDD 15. That is, the LUT 15b is a table that represents colors by means of both the sRGB color system and the CMYKOG color system, matches the two, and describes the correspondence between the plurality of colors. The colors of the CMYKOG color system corresponding to any color represented in the sRGB color system can thus be calculated through interpolation by referencing the sRGB colors, which are surrounding colors, stipulated in the LUT 15b, enabling color conversion. For the LUT 15b, a plurality of tables are prepared in advance, and are matched to each set of printing conditions, such as the type of printing medium and the resolution.

The color converted CMYKOG data is also dot matrix data in which the colors of each pixel are stipulated upon the tone representation of each color component, which in this embodiment is 256 tones. The half tone process module 33 is a module for referencing the CMYKOG data to produce half tone image data representing the color of each pixel at a tone of less than 256 (2 tones in this embodiment) for each color. The printing data creation module 34 receives the half tone image data and arranges the data in the sequence used by the printer 40, and sequentially outputs units of data used per main scan to the printer 40. As a result, the printer 40 prints images represented by the RGB data 15a.

### 2) Simulation Process

The simulation module 35, on the other hand, is a module for retrieving the half tone image data to simulate the recording state of the dots without printing them on the printer 40, and for outputting a graininess indicator used to evaluate the graininess in the recording state to the display 18. For that purpose, the simulation module 35 comprises a half tone image data retrieval component 35a, parameter retrieval component 35b, subpixel plane forming component 35c, recording state data creating component 35d, brightness calculating component 35e, and graininess indicator calculating component 35f.

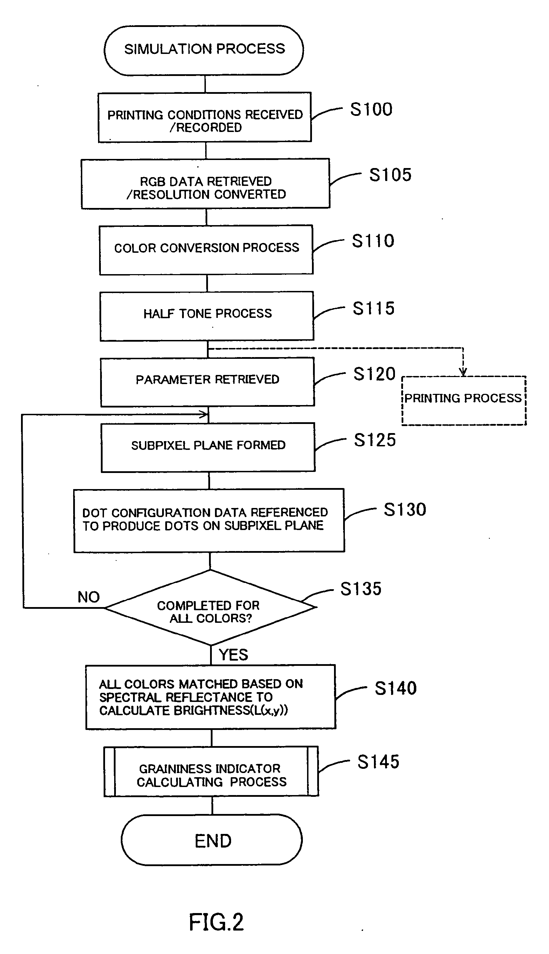

The recording state is simulated by indicating the start of simulation on the property screen (not shown) of the PRT DRV 30. Figure 2 is a flow chart of the simulation process. When the simulation process begins, the user operates the mouse 13 or the like to input the above RGB data 15a printing conditions, and the PRT DRV 30 obtains the data representing the printing conditions and receives them as printing conditions during the simulation (S 100). At this time, the data representing the printing conditions necessary for the simulation process described below is stored as the parameter data 15c on the HDD 15.

Here, the printing conditions are only stipulated for simulation, and no printing conditions are indicated for actual printing. All data needed for printing (such as printing mode, resolution, or speed) can serve as the printing conditions, but there is no need for the user to select all the printing conditions. Printing conditions that are not input may be handled by using the default printing conditions. When the printing conditions have been set, the image data retrieval module 31, color conversion module 32, and half tone process module 33 perform their respective processed on the printing conditions.

That is, the image data retrieval module 31 retrieves the RGB data 15a, and references the printing resolution specified as the printing conditions. The number of pixels for forming the image on the printer is calculated and is compared with the number of pixels in the RGB data 15a. The number of pixels is thus adjusted by interpolation or the like if the number of pixels of the RGB data 15a is too great or too little (Step S105).

The color conversion module 32 selects the LUT 15b corresponding to the resolution, type of printing medium, or the like specified as a printing condition, and references the LUT 15b to convert the color system of the RGB data 15a or the data in which the number of pixels has been adjusted (Step S110). That is, tone data for each CMYKOG color is produced. The half tone process module 33 runs a half tone process on the color converted tone data. When a half tone algorithm can be specified as a printing condition, the half tone process is rune with the specified algorithm (Step S115). As indicated by the dashed line in Figure 2, after the half tone process, the printing data creating module 34 runs the above process for printing.

### 2-1) Creation of Recording State Data on Subpixel Plane

In the simulation process, after Step S 115, the half tone image data retrieving component 35a of the simulation module 35 retrieves the half tone processed data, and the modules of the simulation module 35 runt he processes after Step S120 to calculate the graininess indicator. In this embodiment, the graininess indicator is calculated, with the parameter data 15c, dot configuration data 15d, and spectral reflectance data 15e recorded on the HDD 15.

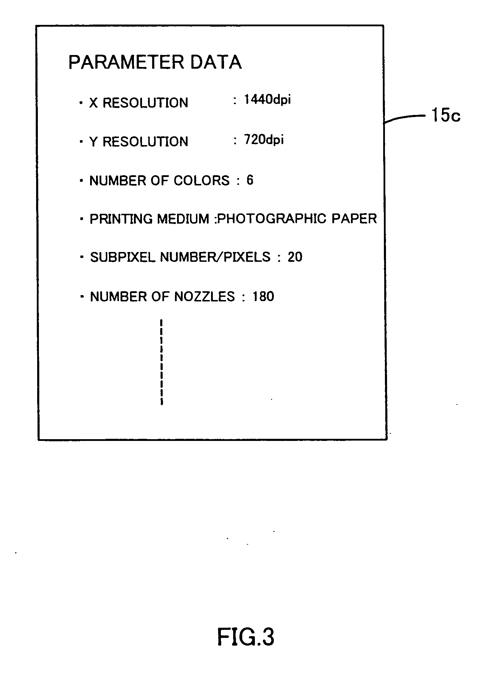

Figure 3 illustrates an example of parameter data 15c. The parameter data 15c includes predetermined data and data representing the printing conditions input by the use, as noted above. The type of printing medium, the number of ink colors, the subscanning resolution (Y resolution) and main scanning resolution (X resolution) obtained as printing conditions are described in the figure.

The X resolution and Y resolution are data indicating the resolution in units of dip or the like, and are 1440 dpi and 720 dpi, respectively, in the figure. The number of ink colors is the number of ink colors mounted on the printer 40. In the present embodiment, six colors are indicated, to specify CMYKOG ink colors. Of course, the ink colors themselves may be directly indicated. The printing medium data indicates the type of printing medium, such as photographic paper, but there is no need for any data indicating the printing medium if the structure does not permit the selection of multiple types of media.

In the example shown in Figure 3, "subpixel number/pixel" and the number of nozzles are given as predetermined data. The subpixel number/pixel indicates the division number when the pixels in the half tone processes data are divided into the smaller subpixels, and in Figure 3 indicates that each pixel is divided into 20 subpixels. Of course, the division number may be indicated by the user as a printing condition, and is not limited to 20. The number of nozzles indicates the number of nozzles in the subscanning direction formed in the carriage mounted on the printer 40. Various other types of data needed when calculating the graininess indicators can be described in the parameter data 15c and used in addition to the above.

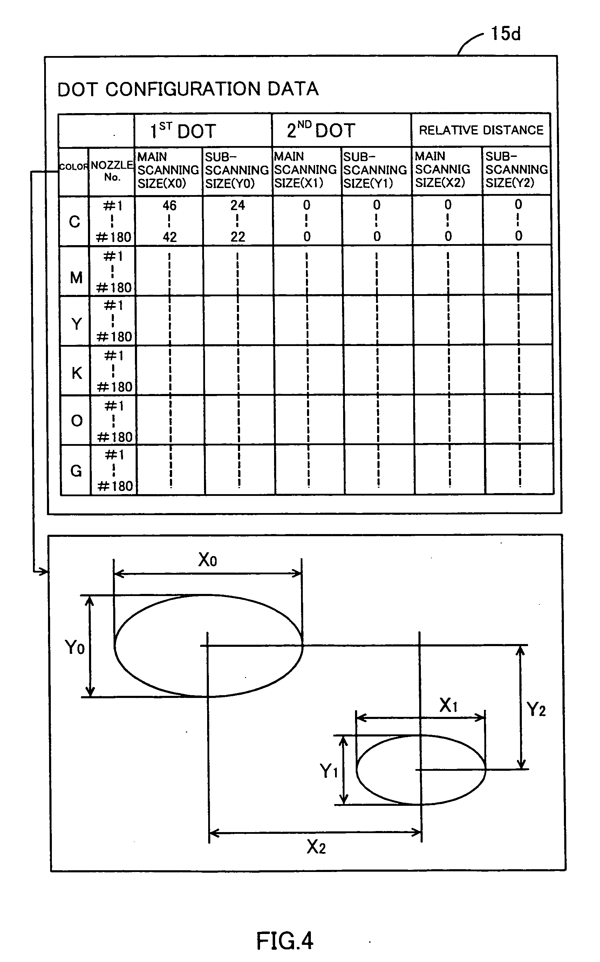

Figure 4 illustrates an example of the dot configuration data 15d. The dot configuration data 15d is data in which parameters for specifying the dot shape and size are described for each nozzle so that the dots that are to be recorded on the printing medium are reproduced on the subpixel plane. In this embodiment, the dot configuration is predetermined to be elliptical, and the shape and size are specified on the basis of the major and minor axes of the ellipsis. In the example illustrated in Figure 4, the parameters indicated are the size of, and relative distance between, a first dot and second dot, so as to address cases where ink drops split in two by the time the ink drops from the nozzle reach the printing medium.

That is, the main scanning size (X0) and subscanning size (Y0) of the first dot and the main scanning size (X1) and subscanning size (Y1) of the second dot can be described, and the relative distance between the first and second dots can be described as the main scanning distance (X2) and subscanning distance (Y2). The parameters are described for each nozzle and each ink color. Sets of dot configuration data as illustrated in Figure 4 are prepared for each type of printing medium.

The bottom part of Figure 4 illustrates the shape of the dot specified by the parameters. The first and second dots form ellipses in which the major or minor axis is the subscanning size specified by the dot configuration data 15d, giving the shapes of the dots. The relative distance between the dots can be specified as the distance between the centers of the two. The dot configuration data 15d is prepared by actually ejecting ink from the nozzles formed in the carriage mounted on the printer 40 and measuring the shape and size on the printing medium. The parameter values are determined in subpixel units. The size in each scanning direction can therefore be uniformly specified on the subpixel plane.

In the example illustrated in Figure 4, the main scanning size of a first dot formed by nozzle No. 1 in black ink is 46, and the subscanning size is 24. The size of the second dot in the main and subscanning directions is 0. The relative distance is thus 0. In this case, the values indicate that the ink drops do not split when ejected, and that one first dot is formed by the ejection of each drop of ink.

When ink drops are ejected as the carriage on the printer 40 travels in the main scanning direction, the ink drops are ejected at a relative speed in the main scanning direction relative to the printing medium, forming elliptical dots in which the major axis is generally parallel to the main scanning direction on the printing medium. The dot shape is thus generally an ellipises in which the major axis is in the main scanning direction, as illustrated in the bottom part of Figure 4, but of course, the direction of the major axis is not limited, and round dots may also be formed with equivalent major and minor axes. The distance between dots may also be 3 or more, and data showing the pattern itself of the dot shape formed by a plurality of subpixels may also be described.

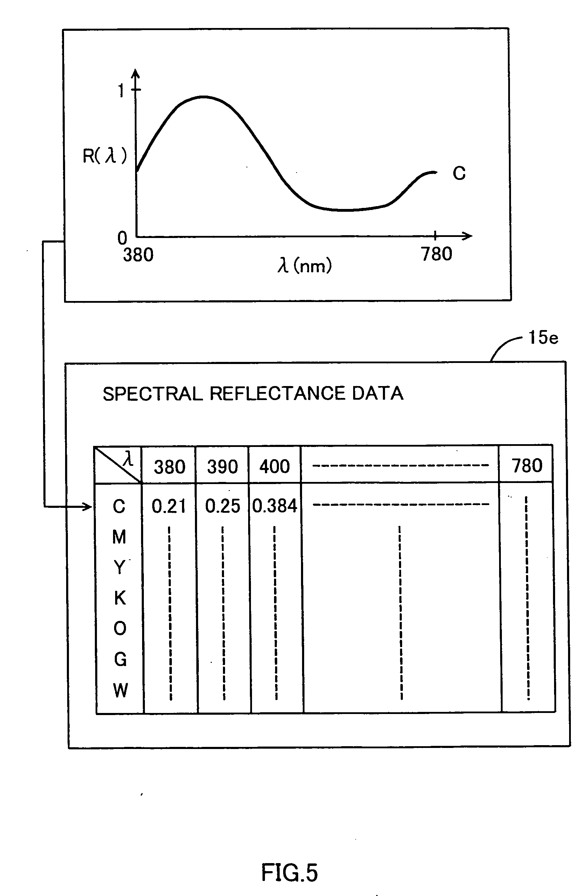

Figure 5 illustrates an example of spectral reflectance data 15e. The spectral reflectance data 15e is data representing the reflectance of dots recorded on the printing medium according to the wavelengths of a plurality of lights. The reflectance is predetermined for the printing media and colored inks used by the printer 40 in a state where no ink is recorded (W in Figure 5). For example, the C ink spectral reflectance (R(λ)) is given in the top part of Figure 5. The spectral reflectance is measured beforehand, and the reflectance is specified in 10 nm intervals from a wavelength of 380 nm to 780 nm to produce the spectral reflectance data 15e. In the spectral reflectance data, the sets of data given in Figure 5 are also prepared for each type of printing medium.

In this embodiment, patches of a certain size are printed with the maximum amount of ink on each printing medium, and the patches are colorimetrically measured under a certain light source to obtain the spectral reflectance. That is, the resulting spectral reflectance is the spectral reflectance when the dots are observed. The method for obtaining the spectral reflectance is an example. Patches may be printed at a certain ink recording rate, and the ratio between the area of the dots on the printing medium and the area where not dots are recorded may be used to calculate the spectral reflectance of each color. Various structures may be employed. In the invention, the color value (in this embodiment, the brightness) should be calculated for each subpixel. In that sense, there is no especial need to prepare data representing the spectral reflectance. It is possible, for example, to prepare data representing the color value when of single colors and the color value of several overlapping colors.

In the flow chart of Figure 2, when the half tone image data retrieval component 35a thus obtains the half tone processed data, the parameter retrieval component 35b appropriately obtains the necessary data from the parameter data 15c recorded on the HDD 15 (Step S120). In this embodiment, the data retrieves represents the X resolution, Y resolution, number of colors, printing medium, and subpixel number/pixel.

The subpixel plane forming component 35c forms a subpixel plane for simulating the recording state of the dots (Step S125). That is, the pixels in the data retrieved by the half tone image data retrieval component 35a are divided by the subpixel number/pixel of the parameter data 15c to form a plane in which simulation is based on the subpixels obtained by that division process. That is, the dot matrix of the half tone image data is converted to a dot matrix of even higher resolution. A specific process can be implemented by defining the arrangement to allow the recording state data to be specified for the pixels consisting of subpixels.

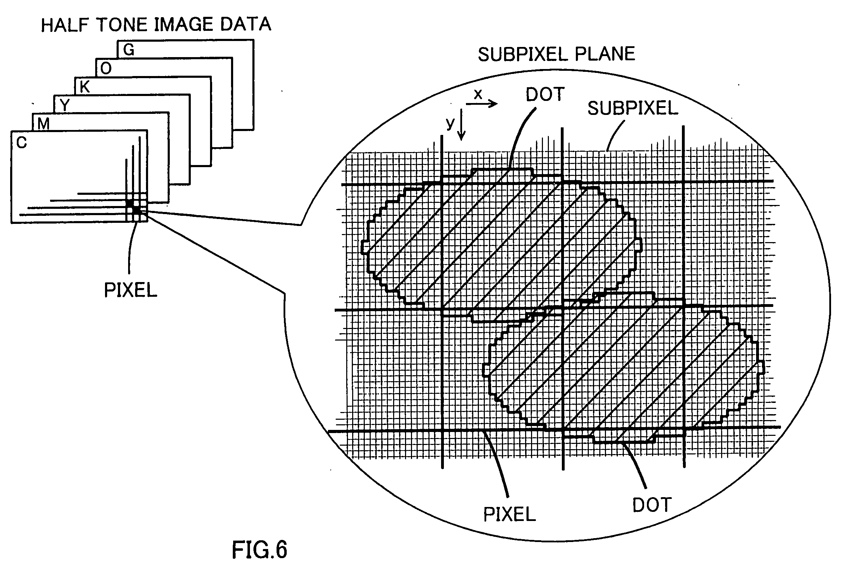

Figure 6 illustrates the simulation process in this embodiment. The left side of the figure shows the half tone image data after the half tone process, and the subpixel plane is shown in the middle of the figure. That is, a plane formed by squares smaller than the pixels, as illustrated in the middle of the figure, can be considered the subpixel plane. In Figure 6, the coordinates at the upper left end of the subpixel plan are (0,0), x indicates coordinates in the main scanning direction, and y indicates coordinates in the subscanning direction. When the subpixel plane has been formed, the recording state data creating component 35d simulates the dot configuration on the subpixel plane with reference to the dot configuration data 15d (Step S130).

That is, because the half tone processed half tone image data indicates whether or not dots are formed with respect to each pixel at a tone of 2 (In this embodiment, said half tone image data specifies a forming state of dots for each pixel.), it is possible to determine whether or not a dot is formed on subpixels corresponding to each pixel from the half tone image data. The printing 40 in this embodiment drives the carriage and paper feed roller by means of certain main scanning and subscanning control methods. It is thus possible to specify the nozzles forming the dots of each pixel in the half tone image data b means of the contents of a process similar to the arrangement process in the printing data creation module 34. The dot configuration data 15d can then be referenced to specify in detail the configuration of dots formed in the subpixels corresponding to each pixel. Of course, data indicating the control methods may be prerecorded on the HDD 15, and the data may be referenced to specify the nozzle.

In this embodiment, the center of the pixels is the standard location, and the dots are located so that the center of the first dot corresponds to this standard location. When this process is done for all pixels, dots can be formed on the subpixel plane, as represented by the patches in Figure 6. When dots are formed on the subpixel plane while the dot configuration is specified in detail as above, it is determined whether or not the process for forming the dots has been completed for all the colors retrieved in the above Step S 120 (Step S135), and the process is repeated from Step S125 on until it is determined that the process has been completed for all colors. The data obtained in this manner is the recording state data.

### 2-2) Calculation of Graininess Indicator

When dots have been formed on the subpixel plane for all colors, the brightness calculating component 35e calculated the brightness of superposed inks to enable evaluation of how dots formed by each ink color will look to the human eye (Step S140). That is, a certain light source is assumed, the tristimulus values XYZ are calculated from the spectral reflectance corresponding to the printing medium retrieved in Step S120 and the spectral sensitivity of the human eye, and the L*a*b* values are calculated from the tristimulus values.

The resulting L* is the brightness. The brightness is specified for coordinates on the subpixel plane (represented as L(x,y)). The coordinates (x,y) of the ink colors on the subpixel plane correspond to the same location. Thus, when the dots of different colored inks are formed on the same coordinates on the subpixel plane, the brightness should be calculated as the superposed spectral reflectance obtained by multiplying the spectral reflectance of those colors. When no dots are formed on the coordinates (x,y), the brightness on the printing medium (W in the spectral reflectance data 15e) is L(x,y). When L(x,y) is obtained, the graininess indicator calculating component 35f calculates the graininess indicator for evaluating the graininess of the image based on this L(x,y) (Step S 145).

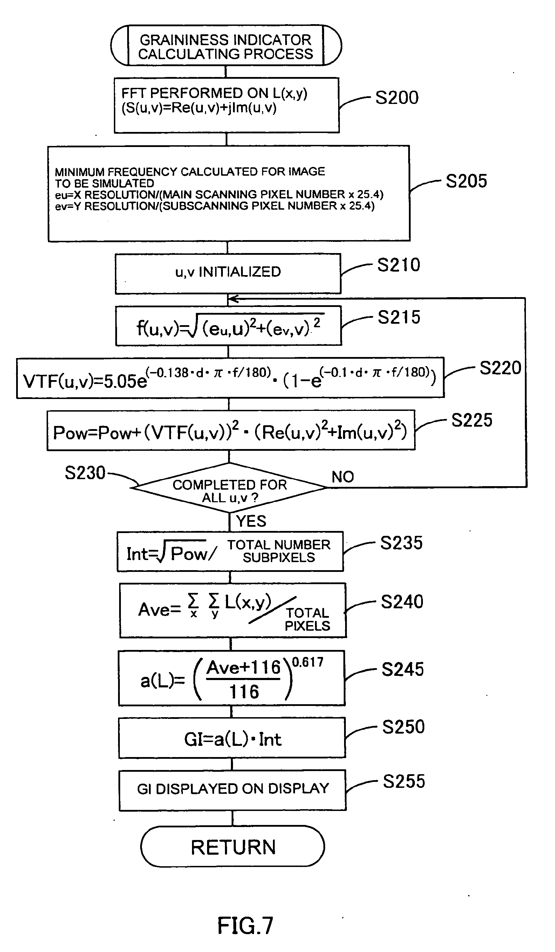

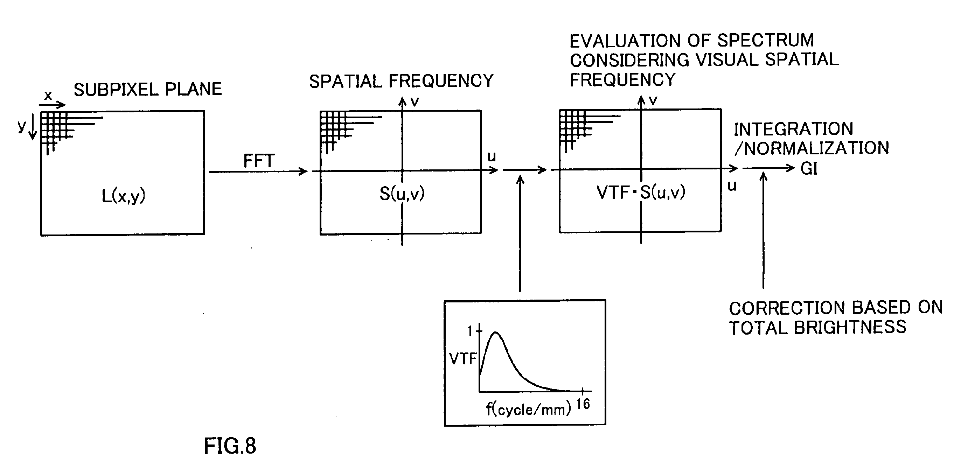

Figure 7 is a flow chart for calculating the graininess indicator, and Figure 8 illustrates how to calculate the graininess indicator. In this embodiment, the graininess indicator evaluates image brightness in terms of spatial frequency (cycle/mm). For that purpose, an FFT (Fast Fourier Transformation) is first performed on the brightness L(x,y) shown at the left end of Figure 8 (Step S200). The resulting spatial frequency spectrum is represented as S(u,v) in Figures 7 and 8. The spectrum S(u,v) consists of a real component Re(u,v) and an imaginary component Im(u,v), where S(u,v) = Re(u,v) + jIm(u,v).

Here, (u,v) is the dimension of the reciprocal space of (x,y). In the present embodiment, (x,y) are defined as coordinates, and the resolution, etc., must be taken into consideration to match the actual length dimensions. The dimensions must therefore be transformed when evaluating the S(u,v) in terms of spatial frequency dimensions. The lowest frequency of the image being simulated is then first calculated to calculate the magnitude f(u,v) of the spatial frequency corresponding to the coordinates (u,v) (Step S205). The lowest frequency of the image being simulated is the frequency of one oscillation in the printed results printed by the half tone image data of the simulated image, and is defined in both the main scanning and subscanning directions.

That is, the lowest frequency eᵤ in the main scanning direction is defined as X resolution/(main scanning pixel number × 25.4), and the lowest frequency eᵥ in the subscanning direction is defined as Y resolution/(subscanning pixel number x 25.4). The X resolution and Y resolution are data obtained in Step S120 above. Here, one inch is 25.4 mm. When the lowest frequency eᵤ and eᵥ in both scanning directions is calculated, the magnitude f(u,v) of the spatial frequency for any coordinate (u,v) can be calculated as ((eᵤ.u)² + (eᵥ·v)²))^{1/2}.

The sensitivity to brightness on the human eye depends on the magnitude f(u,v) of the spatial frequency. The visual spatial frequency properties are properties such as the VTF(f) shown at the bottom in the middle of Figure 8, for example. In Figure 8, the VTG(f) is VTF = 5.05 x exp (-0.138·d·π·f/180) × (1-exp(-0.1·d·π·f/180)). Here, d is the distance between the printed object and the eye, and f is the magnitude f of the spatial frequency. Since f is represented as a function of (u,v), the visual spatial frequency characteristics VTF can be a function VTF(u,v) of (u,v).

The VTF(u,v) can be multiplied by the spectrum S(u,v) to evaluate the spectrum S(u,v) while taking the visual spatial frequency properties into consideration. This evaluation can also be integrated to evaluate the spatial frequency for all subpixels. In this embodiment, the process is done up to the integration in the processes of Steps S210 to S230. First, (u,v) is initialized in both directions as 0 (Step S210), and the spatial frequency f(u,v) at certain coordinates (u,v) is calculated (Step S215). The VTF at this spatial frequency f is also calculated (Step S220).

When the VTF is obtained, the square of the VTF and the square of the spectrum S(u,v) are multiplied, and the sum of these results and the variable Pow for substituting the integrated results is calculated (Step S225). That is, the spectrum S(u,v) includes the real component Re(u,v) and imaginary component Im(u,v), and the square of the VTF and the square of the spectrum S(u,v) must first be integrated to evaluate the magnitude. It is then determined whether or not the above process has been performed on all coordinates (u,v) (Step S230). If the process for all coordinates (u,v) has not been completed, the unprocessed coordinates (u,v) are extracted to repeat the process from Step S215 on. Because the VTF rapidly decreases to virtually 0 when the magnitude of the spatial frequency increases as shown in Figure 8, the calculations can be done within the necessary and sufficient range by limiting the coordinate (u,v) threshold to no more than a certain level.

When the integration is complete, Pow_{1/2}/total subpixel number is calculated (Step S235). That is, the process returns to the dimension of the magnitude of the spectrum S(u,v) by means of the square root of the variable Pow for normalization by division with the total subpixel number. As a result of this normalization, an objective indicator (Int in Figure 7) that is not dependent on the number of pixels in the original half tone image data is calculated. Of course, since the normalization should be possible here, normalization may also be done by division with the number of pixels in the half tone image data. Normalization will allow graininess to be evaluated irrespective of the size of the image, but normalization is not necessary when graininess is repeatedly evaluated by modifying the parameters o of image processing or the like of images with the same number of pixels.

In this embodiment, the graininess indicator is produced upon correction taking in to consideration the effects of the brightness of the printed object as a whole. That is, correction is undertaken for printed objects that look different to the human eye depending on whether it is bright or dark, even when the spatial frequency spectrum is the same, and the whole looks grainer when bright. For that purpose, the brightness L(x,y) for all pixels is made sufficient and is divided by the total pixels to calculate the average Ave brightness for the entire image (Step S240).

The correction factor a(L) based on the brightness of the entire image is defined as a(L)=((Ave+16)/116)^{0.8}, the correction factor a(L) is calculated (Step S245), and is multiplied by Int to give the graininess indicator GI (Step S250). The correction factor should be a function with which the value of the factor increases or decreases depending on the average brightness. Various other functions can also be used. When the graininess indicator GI has been calculated by the above process, the graininess indicator calculating component 35f outputs certain control signals through the display DRV 22 and displays the graininess indicator GI on the display 18 (Step S255).

The graininess indicator represents the graininess of the printed object when printed by means of the half tone image data, making it possible to evaluate the graininess of the half tone image data without actually printing. In this embodiment, the process is completed with the display of the graininess indicator GI on the display 18 in the flow charts shown in Figures 2 and 7, but, of course, after the graininess indicator GI has been calculated, the process of modifying the printing conditions and again calculating the graininess indicator GI may be repeated.

That is, the graininess indicator GI can be easily calculated under various printing conditions by repeatedly modifying the printing conditions and calculating the graininess indicator GI. The image process giving the highest image quality for the input RGB data can be determined. Of course, there is no need to evaluate only the image quality. It is also possible to determine the most favorable image process in consideration of the expected printing speed or the like as well.

For example, when the graininess indicator is calculated for a plurality of resolutions, it is possible to fine the minimum necessary resolution from the perspective of graininess for the half tone image data. In addition, when the graininess increases significantly even when over a certain resolution, it is possible to prevent useless increases in resolution which fail to improve image quality and to prevent decreases in printing speed, thereby optimizing the overall quality during printing. It is also possible to prepare a plurality of LUT to calculate the graininess indicator from the results of color conversion with reference to each LUT and to calculate the graininess indicator GI from the results of color conversion by means of multiple interpolation methods so as to ascertain the optimal color conversion method from the perspective of graininess and to ascertain the optimal color conversion method in conjunction with the speed of the color conversion. The graininess indicator can also be calculated from the results or processing based on a plurality of half tone algorithms so as to ascertain the optimal algorithm from the perspective of graininess and to ascertain the optimal algorithm in conjunction with the half tone processing speed.

### 3) Other Embodiments

In the above embodiment, ink ejected from nozzles was recorded in standard locations, and simulation was done in consideration of the potential for differences in the configuration of dots formed by the ink ejected from the nozzles. This embodiment is an embodiment for when working the invention. The possibility that the locations where the dots are formed will deviation from the standard locations may also be taken into consideration. For example, data can be prepared on the extent to which the ink ejected from the nozzles deviates from the standard dot formation locations in order to allow the dot formation locations to be fine-tuned during the creation of the recording state data.

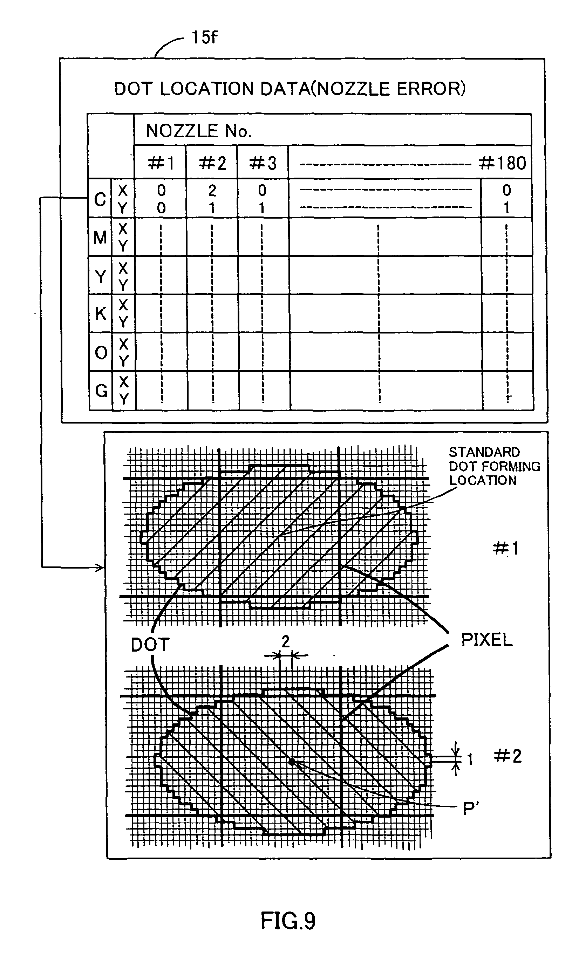

Figure 9 illustrates an example of such data. The dot location data 15f is data in which deviation from the standard locations are described in subpixel units for each of a plurality of nozzles formed in the carriage. That is, errors can occur in the in the ink drop recording locations between a plurality of nozzles even when ink drops are ejected under the same conditions. Ink is ejected from the nozzles of the printer 40 to measure the recording locations and produce data representing the extent of deviation. At this time, the recording location of a certain nozzle is considered the standard dot forming location. The main scanning deviation (X) and subscanning deviation (Y) of the nozzle forming the dot in this standard dot forming location are both 0. In the example in Figure 9, the center of the pixel is the standard dot forming location.

When there is deviation from the standard dot forming location, the subpixels corresponding to the deviation in the main and subscanning directions are given as the dot location data. The dot location data 15f is described for each nozzle, and the deviation each ink color is thus described. The dot location data is pre-recorded on the HDD 15. The structure and process flow for the simulation process are virtually the same as in the above embodiment, but the process is different in the recording state data creating component 35d.

That is, in Step S130, the configuration of the dots formed by each nozzle is specified with reference to the dot configuration data 15d, and the dot formation location is adjusted with reference to the dot location data 15f. The data in Figure 9 is used as an example. Because the main scanning deviation (X) and subscanning deviation (Y) at nozzle number 1 are both 0, the ink ejected from nozzle number 1 forms dots in the standard dot formation location, as illustrated in the bottom portion of Figure 9.

At nozzle number 2, the main scanning deviation (X) is 2 and the subscanning deviation (Y) is 1. Accordingly, the dots formed by nozzle number 2 are formed in a location P deviating 2 subpixels in the main scanning direction from the center of the pixel, which is the standard dot formation location, and 1 subpixel in the subscanning direction. When the dot recording state is thus specified in conjunction with the error between nozzles, and the graininess indicator GI is calculated on that basis, the printing quality can be evaluated including the error between nozzles. Because the graininess indicator GI can be evaluated including the error between nozzles, the graininess indicator GI can be calculated for a plurality of image processes as noted above to extract from the plurality of image processes the image process capable of preserving high quality despite such errors.

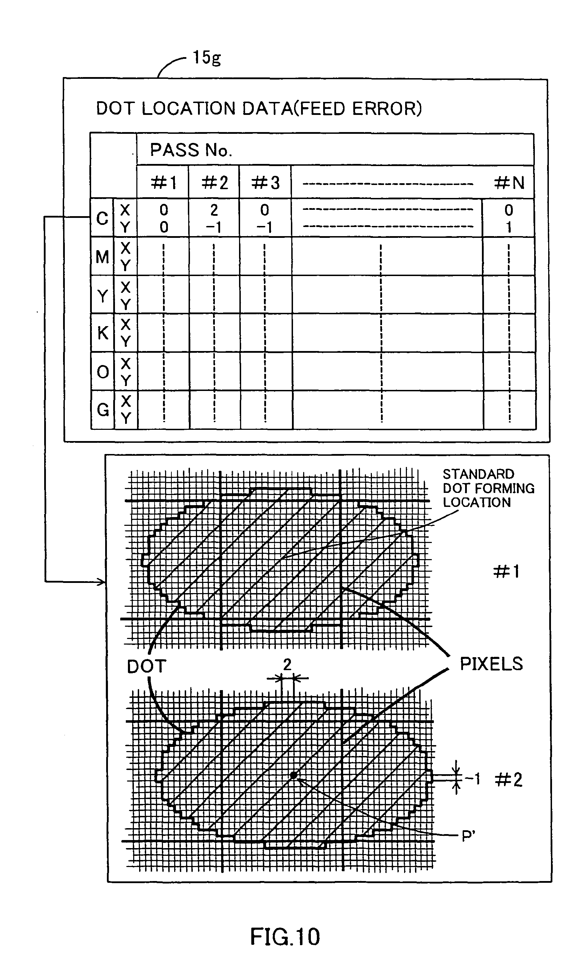

The errors which can be taken into consideration in the invention are not limited to the above errors between nozzles. Carriage feed errors may also be considered, for example. Figure 10 illustrates an example of dot location data when taking such feed errors into consideration. The dot location data 15g is data in which deviation from the standard location is described in subpixel units for each number of main scans (pass). That is, because dots are recorded through the repeating main and subscanning of the carriage, errors can occur in the dot recording location as a result of drive errors when the carriage is driven in the main scanning direction or feed errors in the paper feed roller. Ink is ejected from the nozzles of the printer 40 to measure the recording locations, and data representing the deviation is produced. At this time, the recording location of a certain pass is considered the standard dot formation location. The main scanning deviation (X) and subscanning deviation (Y) of the pass in which dots are formed in this standard dot forming location are both 0. In the example in Figure 10, the center of the pixel is the standard dot forming location.

When there is deviation from the standard dot forming location, the subpixels corresponding to the deviation in the main and subscanning directions are given as the dot location data. In the dot location data 15g, the deviation from the standard dot forming location resulting in each pass is given for each ink color. The maximum number of passes (#N in Figure 10) is not particularly limited, but should correspond to the maximum printing medium size which can be printed by the printer 40. For example, the number of passes needed for printing the entire surface of size A4 printing medium would be the maximum number of passes.

The dot location data 15g is pre-recorded on the HDD 15. The structure and process flow for the simulation process are virtually the same as in the above embodiment, but the process is different in the recording state data creating component 35d. That is, in Step S 130, the configuration of the dots formed by each pass is specified with reference to the dot configuration data 15d, and the dot formation location is adjusted with reference to the dot location data 15g. The data in Figure 10 is used as an example. Because the main scanning deviation (X) and subscanning deviation (Y) in pass number 1 are both 0, the ink ejected in pass number 1 forms dots in the standard dot formation location, as illustrated in the bottom portion of Figure 10.

In pass number 2, the main scanning deviation (X) is 2 and the subscanning deviation (Y) is 1. Accordingly, the dots formed in pass number 2 are formed in a location P' deviating 2 subpixels in the main scanning direction from the center of the pixel, which is the standard dot formation location, and 1 subpixel in the subscanning direction. When the dot recording state is thus specified in conjunction with the error between passes, and the graininess indicator GI is calculated on that basis, the printing quality can be evaluated including the error between passes. Because the graininess indicator GI can be evaluated including the error between passes, the graininess indicator GI can be calculated for a plurality of image processes as noted above to extract from the plurality of image processes the image process capable of preserving high quality despite such errors.

The error between nozzles and feed errors described above can occur simultaneously. Both the above dot formation data 15f and 15g can be prepared to make adjustments in the dot formation locations by adding the deviation from both types of dot location data to the above standard dot formation location. In the examples shown in Figures 9 and 10, the deviation was represented in subpixel units, and thus had to be matched with the resolution, division number of pixels divided into subpixels, and the like. When these conditions change, the dot location data corresponding to those conditions is referenced. Of course, these are examples. The deviation measured in the manner described above can be given in units of length, and the deviation can be calculated in subpixel units according to resolution or pixel division number.

In the above embodiments, the printer 40 was assumed to drive the paper feed roller and carriage by specific main scanning and subscanning control methods, but the invention can also be applied to printers 40 that drive the paper feed roller and carriage by various methods of control. Specifically, if the control method is different, the nozzles and passes for forming the dots of images are different even when pixels have the same half tone image data. The nozzles can be specified based on the control method.

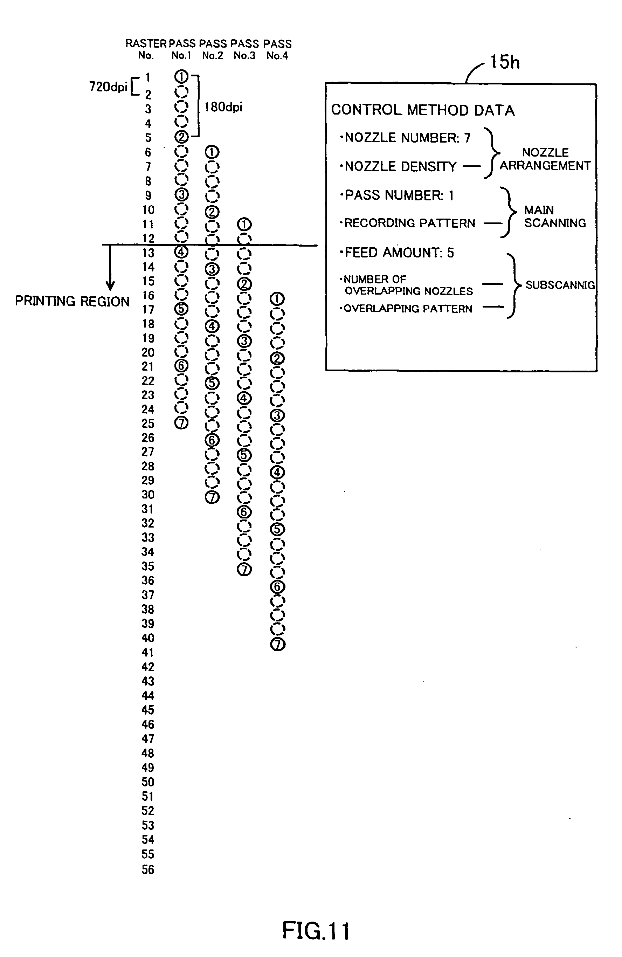

Figure 11 illustrates an example of control method data representing main scan and subscan control methods and the arrangement of the plurality of nozzles formed in the carriage. The number and density of nozzles in the nozzle arrangement are described in the control data 15h in the figure. The number of nozzles indicates the number of nozzles lined up in the subscanning direction in the carriage. In Figure 11, this number is 7 for the sake of simplicity, but the actual number can be 180 or more. The nozzle density represents the density, in units of dpi, of the nozzles arranged in the subscanning direction, that is, the density in terms of the number of nozzles per inch in the subscanning direction. In the example in Figure 11, the nozzle density is not described, but such data can be provide when the nozzle density is needed in order to specify the nozzles.

The number of passes and the recording pattern can also be given as methods for controlling main scanning. The number of passes indicates how many passes are needed to complete one line (raster) in the main scanning direction. The recording pattern indicates in which pass the adjacent dots are recorded the recording pattern takes more two or more passes tow complete 1 raster. For example, 0 indicates first pass, and 1 indicates a subsequent pass. A recording pattern can be specified as 01011010 to specify passes for recording each dot. In the example in Figure 11, the number of passes is 1, and there is thus no need to describe the recording pattern.

The amount of feed, the number of overlapping nozzles, and overlapping patterns can be given as methods for controlling subscanning. The amount of feed is data indicating the amount of feed du8ring subscanning in units of the number of rasters. That is, one raster length is determined according to the Y resolution (such as 1/720 inch for a Y resolution of 720 dpi, for example). The amount of feed can thus be represented in the number of rasters to determine the actual subscanning feed amount per cycle. The number of overlapping nozzles is data indicating the number of nozzles when control is managed in such a way as to fill in (overlap) the same pass with the plurality of nozzles formed at the top end and bottom end in the subscanning direction. Overlapping patterns are data showing where dots are formed at either the top end or bottom end in a certain raster. In the example in Figure 11, overlapping is not controlled, and no overlapping pattern or number of overlapping nozzles are indicated.

The left side of Figure 11 shows an example of the control of the details of the control method data 15h. The raster shown here is one line in the main scanning direction. The rasters are number in order from the top. The raster number is the number of passes. A solid line circle indicates the location of the nozzle in each pass under the numbers. The nozzle numbers are 1 to 7 in order from the top. In this example, the main scanning resolution is assumed to be 720 dpi, and the subscanning resolution is assumed to be 180 dpi. The distance between nozzles corresponds to 4 rasters.

As the amount of feed is 5 in the control method data 15h, the feed is 5 rasters in the subscanning direction in pass number 2. When this amount of feed is repeated, the nozzle recording dots in the numbered raster occurs at raster number 13 and after. In the control according to the control method data 15h, no dots are recorded above raster number 12. Dots are recorded from raster number 13 and below. Accordingly, dots are formed at the fourth nozzle in the first rater in the above half tone image data.

When the control method data 15h is used as described above, the nozzles forming dots of each raster can be specified. Nozzles can thus be specified with reference to the above control method data 15h in Step S130, and the dot configuration can be specified with reference to the dot configuration data 15d. As a result, it is possible to easily calculate the graininess indicator GI in the control method even in cases of complex control. Because the control method data 15h can be references to learn the pass number as indicated on the left side in Figure 11 (that is, the number of main scans can be specified), feed errors can be taken into account by referencing the dot location data 15g. Of course, errors between nozzles can also be taken in to consideration by referencing the dot location data 15f.

Although not shown in Figure 11, it is, of course, possible to specify nozzles using data showing the recording pattern when there are two passes, and it is also possible to specify nozzles using data showing the number of overlapping nozzles and overlapping patterns when overlapping is controlled. Of course, when the carriage and paper feed roller are driven by other methods of control, other parameters should be noted in the control method data 15h to specify the dots and passes forming the dots in those methods of control. In the case of other nozzle arrangements, such as when several nozzles are arranged in the subscanning direction to form a nozzle array, and the nozzle array is arranged in the main scanning direction to eject ink of the same color, the data showing the nozzle arrangement should be noted in the control method data 15h, and the dots and passes forming the dots should be specified on the basis of that data and the data showing the control methods.

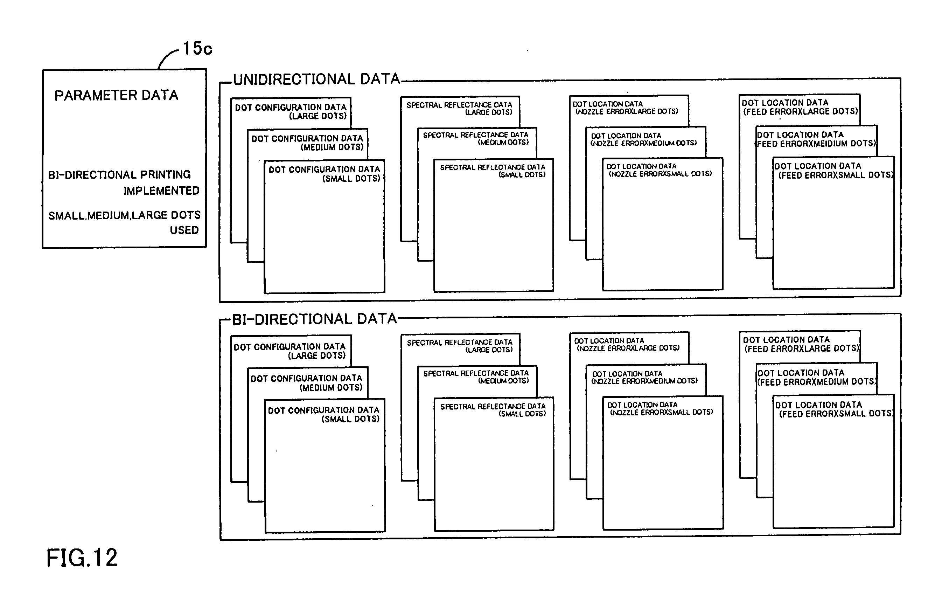

The invention is also applicable to printers capable of adjusting the amount of ink ejected per pass and printers capable of bi-directional printing. Figure 12 illustrates data prepared for such cases. Data indicating whether or not bi-directional printing is done and data indicating whether or not the amount of ejected ink per pass is adjusted are given in addition to the above parameters as parameter data 15c. In this example, the amount of ink ejected per pass can be adjusted in three stages (small, medium, large).

In bi-directional printing, ink is ejected in both the main scanning and return scanning directions. Ink is ejected in either the main or return direction in unidirectional printing. As such, the above dot configuration data, spectral reflectance data, and dot location data is different for bi-directional and unidirectional printing. Bi-directional and unidirectional data are thus prepared. This will allow the recording stat data to be calculated for both bi-directional and unidirectional printing.

The dot forming locations of the three types of small, medium, and large ink drops differ due to errors, the spectral reflectance, and the configuration of the recorded dots. As such, dot configuration data, spectral reflectance data, and dot location data must be prepared for small, medium, and large sizes. In this case, the half tone image data can indicate whether or not a small, medium, or large dot is recorded, producing three types of half tone image data for each color of ink.

When the recording state data is produced, the half tone image data is retrieved, and the dot configuration data, spectral reflectance, or dot location data can be referenced according to the size of the dots to calculate the recording state data resulting from the overlap of dots of different size and ink color. The graininess indicator GI can be calculated based on the recording state data calculated in the manner described above to assess the graininess during bi-directional printing and to assess graininess when using ink drops of the three sizes of large, medium, and small.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An image processing method for processing image data representing images comrising a plurality of pixels, comprising the steps of:
retrieving image data specifying a forming state of dots for each pixel;
retrieving the dot configuration data representing the configuration of dots recorded on a printing medium; and
creating recording state data representing the recording state of the dots formed by the image data on the subpixel plane formed by subpixels that are smaller than the pixels.

2. An image processing method according to Claim 1, wherein the step for retrieving the dot configuration data comprises computing the color value of each subpixel from the spectral reflectance data representing the spectral reflectance of dots formed by the image data, and using the color values as the recording state data representing the recording state.

3. An image processing method according to Claim 2, wherein the step for retrieving the dot configuration data comprises computing the brightness of each subpixel from the spectral reflectance data representing the spectral reflectance of dots formed by the image data, and using the brightness as the recording state data representing the recording state.

4. An image processing method according to any of Claims 1 through 3, further comprising the step of creating a graininess indicator for evaluating the graininess of images printed by means of the image data based on the recording state data created above.

5. An image processing method according to Claim 4, wherein the graininess indicator is an indicator for evaluating the spatial frequency properties of the brightness for each subpixel.

6. An image processing method according to any of Claims 1 through 5, wherein the dot configuration data is data for specifying the size of dots in a typical configuration formed on the printing medium.

7. An image processing method according to any of Claims 1 through 6, wherein dot location data representing the locations where each dot formed by the image data is formed is stored in a memory medium, and the step for retrieving the dot configuration data comprises determining the dot configuration on the subpixel plane by means of the dot configuration data, and determining the locations of the dots on the subpixel plane by means of the dot location data.

8. An image processing method according to Claim 7, wherein the dot location data is data representing the extent of the change from the standard dot formation location based on the ink ejection properties when the ink is ejected from a plurality of nozzles formed in the ink ejection mechanism with which the printing device is equipped.

9. An image processing method according to Claim 7 or 8, wherein the dot location data is data indicating the extent of the change from the standard dot formation location for each of the plurality of nozzles.

10. An image processing method according to any of Claims 7 through 9, wherein the dot location data is data indicating the extent of the change from the standard dot formation location due to the operation of ink ejection mechanisms.

11. An image processing method according to any of Claims 1 through 10 , wherein control method data representing the method for controlling main scanning and sub scanning in the ink ejection mechanism provided in the printing device and representing the arrangement of the plurality of nozzles formed in the ink ejection mechanism is stored in a recording medium, and the step for retrieving the dot configuration data comprises referencing the control method data to specify the nozzles for ejecting the ink when the dots are recorded according to the image data.

12. An image processing method according to any of Claims 7 through 11, wherein the image data is data obtained upon the half tone processing of tone data representing the amount of ink used in each pixel for each color of ink used in the printing device.

13. An image processing device for image processing of image data representing images comrising a plurality of pixels, comprising:
means for retrieving image data specifying a forming state of dots for each pixel;
a memory medium for storing dot configuration data representing the configuration of dots recorded on a printing medium; and
means for creating recording state data representing the recording state of dots formed by the image data on the subpixel plane formed by subpixels that are smaller than the pixels with reference to the dot configuration data.

14. An image processing program for the image processing of image data representing images comprising a plurality of pixels, comprising:
program code for retrieving image data specifying a forming state of dots for each pixel;
a memory medium for storing on certain memory media the dot configuration data representing the configuration of dots recorded on a printing medium; and
program code for creating recording state data representing the recording state of dots formed by the image data on the subpixel plane formed by subpixels that are smaller than the pixels with reference to the dot configuration data.

15. A printing control device for printing by retrieving tone data representing pixel color for each color component and by image processing the tone data, comprising:
an image process indication receiver for receiving data representing image processing through a certain input device;
an image data retriever for retrieving the tone data, and performing the image process specified by the received data to obtain image data in which a forming state of dots per pixel has been specified;
a memory medium for storing the dot configuration data representing the configuration of data recorded on the printing medium; and
a recording state data creator for creating recording state data representing the recording state of dots formed by the image data on the subpixel plane formed by subpixels that are smaller than the pixels with reference to the dot configuration data.
